# EUROPEAN PATENT APPLICATION

(11) **EP 1 813 928 A2**
(43) Date of publication of application: **01.08.2007**
(21) Application number: 06125176.5
(22) Date of filing: 30.11.2006
(51) Int. Cl.: G01M 3/36

(54) **An apparatus for detecting a leak**

(30) Priority: 30.11.2005 GB 0524380
(71) Applicant: Rooney, John, BT34 3QY Down, Northern Ireland Warrenpoint (GB)
(72) Inventor: Rooney, John, BT34 3QY Down, Northern Ireland Warrenpoint (GB)
(74) Representative: McCarthy, Denis Alexis

(57) **Abstract**

An apparatus for detecting a leak comprising a vacuum chamber (2), means for generating a vacuum within the vacuum chamber (2) and a transducer (3) disposed within the vacuum chamber (2). The transducer (3) is a load cell mounted on the roof (5) of the vacuum chamber (2). The vacuum generating means has a vacuum pump (7) coupled to the vacuum chamber (2) via a vacuum line (9). A vacuum valve (11) is mounted on the vacuum line (9) intermediate the pump (7) and the vacuum chamber (2). A vacuum regulator (12) is located on the vacuum line (9) intermediate the vacuum valve (11) and the vacuum chamber (2). The transducer (3) is coupled to an electronic control unit (14).

## Description

This invention relates to an apparatus for detecting a leak and in particular to an apparatus for detecting a leak in a sealed containment packaging. The packaging is used with degradable items and offers protection from moisture, air and biological attack. The most common examples of degradable items are food products, which are packaged in sealed containers, for example, vacuum formed packing or flow wrapped packaging.

The seals formed in these processes can be defective due to changes in the process, materials, trapped product debris, machine failure and contamination. The result being that air, moisture and/or bacteria can enter the packaging causing damage to the product. The worst case scenario occurs when the damage is not noticed until the contaminated product is with the end user. Even if the damage is noticed before it ends up with a consumer, it still presents a yield loss for a manufacturer or processor.

There are a number of current methods for detecting leaks in packaging and each of these methods suffer from distinct disadvantages. Carbon dioxide leak testing involves a product being packed in carbon dioxide and a sensor seeks out increased concentration of the gas due to a leak. Helium detectors look for helium leaking from the packaging and this gas would normally have to be added to the packaging for the purposes of leak detection. Pressure loss leak testing uses a force applied to the outside of the packaging to check for deterioration of the pressure in the packaging due to leaks. A bubble test requires the packaging to be immersed in water under a vacuum and resulting air loss from the leaks can be seen as bubbles in the water.

It is an object of the present invention to provide an alternative form of leak detection.

Accordingly, the present invention provides an apparatus for detecting a leak, the apparatus comprising a vacuum chamber, means for generating a vacuum within the vacuum chamber and a transducer disposed within the vacuum chamber.

Ideally, the apparatus is provided for detecting a leak in a sealed packaged product.

Preferably, the transducer is a load cell.

Ideally, the transducer is mounted on the roof of the vacuum chamber.

Preferably, the vacuum generating means has a vacuum pump coupled to the vacuum chamber via a vacuum line.

Ideally, a vacuum valve is mounted on the vacuum line.

Preferably, the vacuum valve is mounted on the vacuum line intermediate the pump and the vacuum chamber.

Ideally, a vacuum regulator is located on the vacuum line.

Preferably, the vacuum regulator is located on the vacuum line intermediate the vacuum valve and the vacuum chamber.

Ideally, the transducer is coupled to an electronic control unit. Advantageously, the information about leaks and their frequency is documented and used for process control. Faults or changes in the packaging material seal strength is noticed via comparison with normal values stored electronically. Advantageously, the leak detection apparatus is capable of self diagnosing as it records the information from each load cell. If the same load cell gives irregular readings, this indicates a faulty load cell.

Preferably, more than one transducer is disposed in the vacuum chamber.

Ideally, the transducers are spaced along the vacuum chamber.

Preferably, the transducers are spaced along the roof of the vacuum chamber.

Preferably, the vacuum chamber has an opening.

Ideally, the opening of the vacuum chamber is formed for receiving one or more sealed packaged products.

Ideally, the apparatus for detecting a leak also provides a means for supporting at least one sealed packaged product.

Preferably, the means for supporting the at least one sealed packaged product is a conveyor means.

Ideally, the conveyor means has a conveyor belt and drive means. Advantageously, the apparatus incorporated into a production line allows testing of every packaged product coming from a flow wrap machine. One particular machine tests 150 packaged products per minute and is fully integrated into a packaging line to give a wide range of benefits. 100% leak testing takes place on the sealed packaged products before the packaged products are finally packed into outer cartons. The leak detection apparatus reduces downtime and rework and increases process yield as leaking packaged products found during the leak testing can be repackaged. Advantageously, the leak detection apparatus will act as an early warning system for any deterioration in the flow wrap machines sealing capabilities. Faults or changes in the packaged material seal strength will be noticed immediately and accidental punctures or tears in the packaging material will be inspected out of the final packaged products.

Preferably, the conveyor belt has flights transverse the direction of travel of the conveyor belt. Advantageously, the flights divide the belt into compartments each of which receives a sealed packaged product.

Ideally, means are provided to cause relative movement between the vacuum chamber and the conveyor means.

Preferably, the means comprises mechanical components coupled to the vacuum chamber for moving the vacuum chamber towards and away from the conveyor means.

Ideally, the mechanical components are powered hydraulically, electrically and/or pneumatically.

In an alternative embodiment, means are provided for moving the conveyor means toward and away from the vacuum chamber.

Ideally, the opening of the vacuum chamber has sealing means.

Preferably, the sealing means forms an airtight seal between the vacuum chamber and the conveyor means enclosing the sealed packaged product therein.

Ideally, the sealing means is a rubber seal mounted along the edge of the opening.

Ideally, the vacuum chamber comprises a parallelepiped container having its floor removed creating the opening.

Preferably, the apparatus for detecting a leak comprises an inlet conveyor, a leak detection conveyor and an outlet conveyor.

Ideally, a distribution conveyor creates a pathway between the inlet conveyor and the leak detection conveyor.

Preferably, more than one leak detection conveyor is provided.

Ideally, fans are provided along the inlet conveyor. Advantageously, the sealed packaged products are coming from an area where the packaging has just been heat sealed. The fans cool the molten seals to further reduce the risk of damage to the integrity of the seals prior to leak testing.

Preferably, the distribution conveyor has movable guide means substantially in alignment with the at least one leak detection conveyor for directing packaged products down the at least one leak detection conveyor.

Ideally, a collection conveyor is provided along the opposite end of the at least one leak detection conveyor to the distribution conveyor.

Preferably, the collection conveyor creates a pathway between the leak detection conveyor and the outlet conveyor.

Ideally, a bypass conveyor creates a pathway between the distribution conveyor and the outlet conveyor. Advantageously, if the leak detection apparatus slows down and a build up of packaged products occurs on the inlet conveyor, then some of the packaged products can be sent down the bypass conveyor. If for example, one of the main leak detection conveyors is damaged, then the leak detection apparatus can continue to run at 50% inspection with the remainder of the packaged products going down the bypass conveyor. This ensures that the leak detection apparatus does not interfere with the output of the production line.

Preferably, the collection conveyor has means for diverting a leaking packaged product to a testing and resealing area.

Ideally, one or more conveyors are coupled to an electronic control unit.

Preferably, the one or more conveyors are coupled to the same electronic control unit which the at least one transducer is coupled to. Advantageously, if a load cell fails, then the leak detection apparatus is capable of running as normal with the electronic control unit operating the conveyors to leave an empty compartment on the leak detection conveyor under the faulty load cell.

Accordingly, the present invention provides a method of detecting a leak in a sealed packaged product comprising placing the sealed packaged product in a vacuum chamber, creating a vacuum in the chamber and allowing the packaging to be in contact with a transducer as the pressure in the vacuum chamber is decreased.

Ideally, the method comprising measuring the force applied by the packaging to the transducer.

Preferably, the method comprising analysing the force value against force values measured during a test phase use a non leaking packaged product to determine if a leak is present.

Ideally, the method comprising redirecting sealed packaged products identified as having a leak to a testing and resealing area.

Advantageously, the leak testing method is a reliable and quick method capable of carrying out a leak test in approximately 3 to 4 seconds. Allowing time for the vacuum chamber to engage the conveyor and pulling a vacuum, there is a cycle time of approximately 6 to 7 seconds. With twenty packaged products per cycle the throughput of the leak detection apparatus is between 170 and 200 packs per minute. This is adequate for current industrial packaging plants.

The invention will now be described with reference to the accompanying drawings which show by way of example only four embodiments of leak detection apparatus in accordance with the invention. In the drawings:

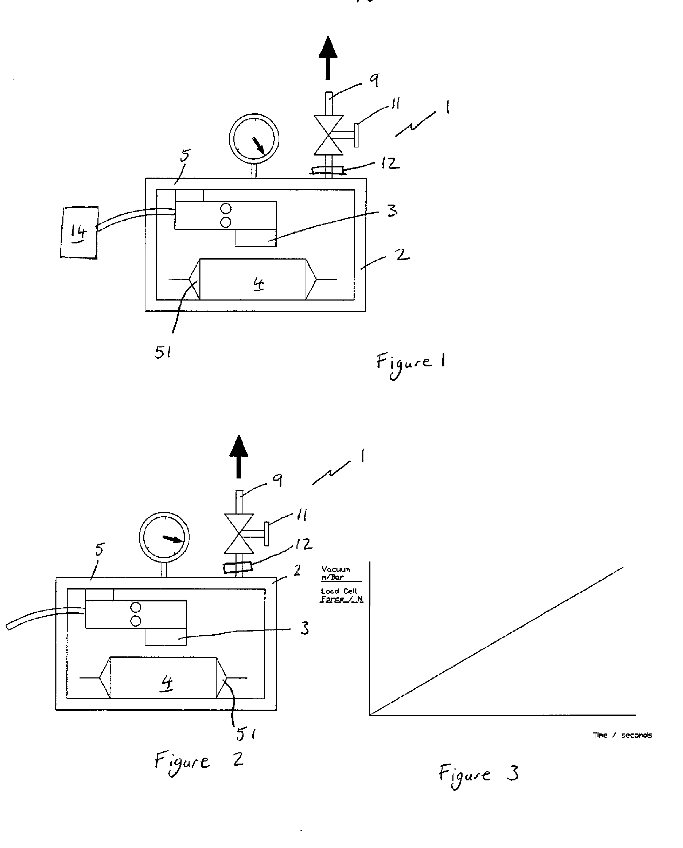

Figure 1 is a schematic drawing of a first embodiment of apparatus for detecting a leak;
Figure 2 is a second schematic drawing of the first embodiment of apparatus for detecting a leak;
Figure 3 is a graph of force v time for a load cell;
Figure 4 is third schematic drawing of the first embodiment of apparatus for detecting a leak;
Figure 5 is a graph of force v time for a load cell;
Figure 6 is a fourth schematic drawing of the first embodiment of apparatus for detecting a leak;
Figure 7 is a graph of force v time for a load cell;
Figure 8 is a partial perspective cutaway view of a second embodiment of leak detection apparatus;
Figure 9 is a partial perspective cutaway view of a third embodiment of leak detection apparatus; and
Figure 10 is a perspective view of a fourth embodiment of leak detection apparatus.

Referring generally to the drawings there is shown an apparatus for detecting a leak indicated generally by the reference numeral 1, the apparatus 1 comprising a vacuum chamber 2, an arrangement for generating a vacuum within the vacuum chamber 2 and a transducer 3 disposed within the vacuum chamber 2. The apparatus 1 is provided for detecting a leak in a sealed packaged product 4 and the transducer 3 is a load cell. The transducer 3 is mounted on the roof 5 of the vacuum chamber 2. The arrangement for generating a vacuum has a vacuum pump 7 coupled to the vacuum chamber 2 via a vacuum line 9 and a vacuum valve 11 is mounted on the vacuum line 9. The vacuum valve 11 is mounted on the vacuum line 9 intermediate the vacuum pump 7 and the vacuum chamber 2. A vacuum regulator 12 is also located on the vacuum line 9 and the vacuum regulator 12 is located on the vacuum line 9 intermediate the vacuum valve 11 and the vacuum chamber 2.

The transducer 3 is coupled to an electronic control unit 14. Advantageously, the information about leaks and their frequency is documented and used for process control via the electronic control unit 14. Faults or changes in the packaging material seal strength is noticed via comparison with normal acceptable values recorded during a test procedure using a non leaking packaged product, the values being stored on the electronic control unit 14. Advantageously, the leak detection apparatus 1 is capable of self diagnosing as it records the information from each load cell. If the same load cell gives irregular readings, this indicates that the load cell is faulty.

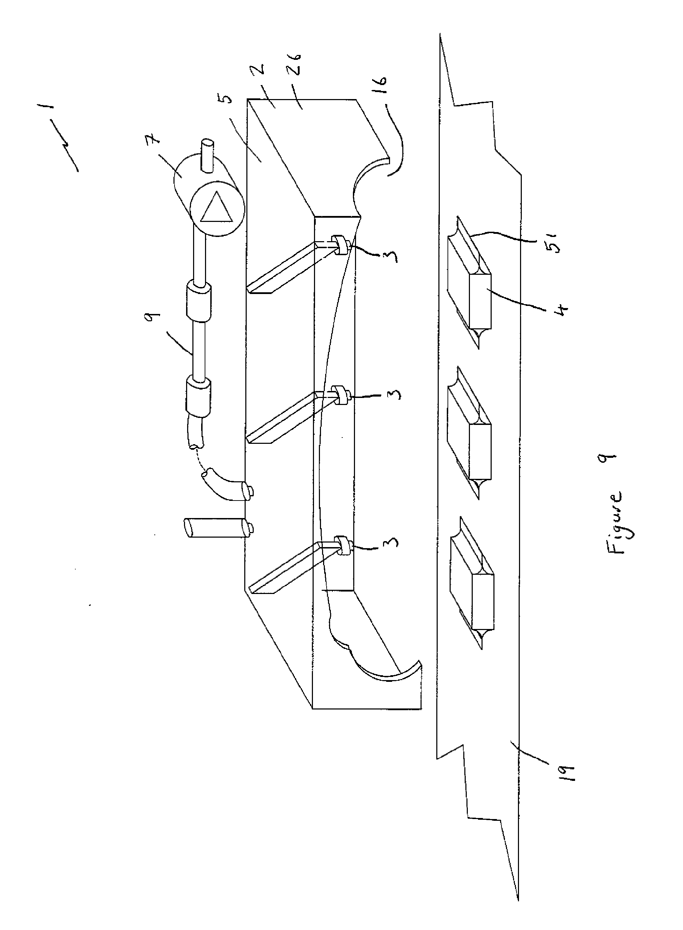

Referring now to Figure 9, three transducers 3 are spaced along the roof 5 of the vacuum chamber 2 which is elongate. The vacuum chamber 2 has an opening 16 and the opening 16 of the vacuum chamber 2 is formed for receiving the three sealed packaged products 4. The apparatus for detecting a leak 1 also provides a conveyor arrangement comprising a conveyor belt 19 and drive member. Advantageously, the apparatus 1 incorporated into a production line allows testing of every packaged product 4 coming from a flow wrap machine, (not shown). One particular machine tests 150 packaged products 4 per minute and is fully integrated into a packaging line to give a wide range of benefits. 100% leak testing takes place on the sealed packaged products 4 before the packaged products 4 are finally packed into outer cartons. The leak detection apparatus 1 reduces downtime and rework and increases process yield as leaking packaged products 4 found during the leak testing can be repackaged. Advantageously, the leak detection apparatus 1 will act as an early warning system for any deterioration in the flow wrap machines sealing capabilities. Faults or changes in the packaged material seal strength will be noticed immediately and accidental punctures or tears in the packaging material will be inspected out of the final packaged products 4.

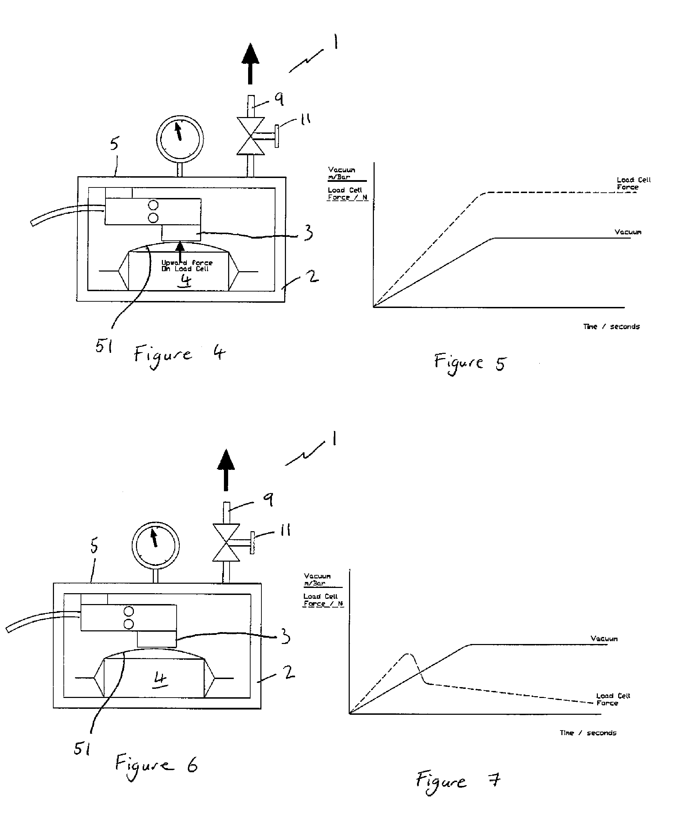

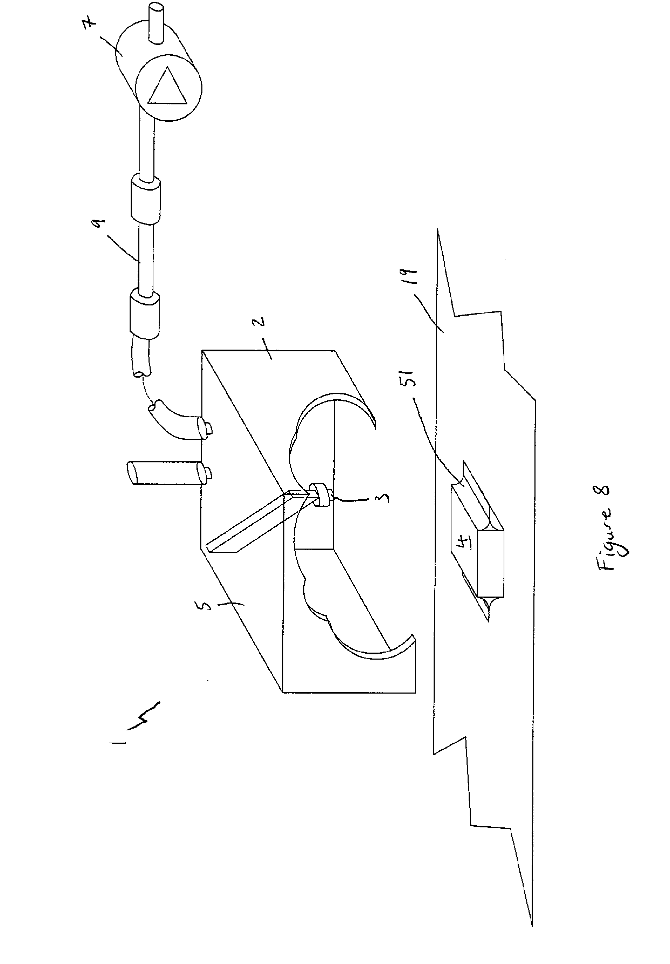

In use, a sealed packaged product 4 is placed in a vacuum chamber 2 and the vacuum valve 11 is opened reducing the pressure in the vacuum chamber 2 as a vacuum is pulled by the vacuum pump 7 through the vacuum line 9. The vacuum in the vacuum chamber 2 is only pulled to a certain pressure value to avoid over stressing the packaging material 51 and the seals and this pressure value is regulated by the vacuum regulator 12. The packaging 51 of the packaged product 4 swells, see Figures 4 and 6, to endeavour to keep the same pressure inside the packaging 51 as exists in the vacuum chamber 2. When the packaging 51 reaches full inflation, the pressure inside the packaging 51 is equal to the pressure in the vacuum chamber 2. If the vacuum continues to increase beyond this point, the pressure in the packaging 51 stops falling and the pressure differential between the packaging 51 and the vacuum chamber 2 continues to rise, except for minimal increase of volume of the sealed packaging 51 due to stretching of the packaging material. The load cell in contact with the inflated sealed packaging 51 measures the increase in this differential pressure. The pressure differential then begins to increase as shown in Figure 5. As the packaging 51 pushes against the load cell, the force it exerts on the load cell is proportional to the pressure differential. If there is a leak, the air/gas can escape from the packaging 51 and as differential pressure begins to increase air escapes from the packaging into the vacuum chamber 2 and in the case of large leaks, little or no force is exerted on the load cell 4. The differential pressure does not increase with increasing vacuum in the vacuum chamber 2. Therefore, leaks can be detected at three stages of the process depending on how bad the leak is. Firstly, if the leak is large, the increase of lifting force will be slower than that of a non leaking packaged product 4 which means the gradient on a graph of pressure v time is not as steep as shown in Figure 5. Secondly, the peak force exerted on the load cell 4 is lower for a leaking packaged product 4 and thirdly in the case of slower leaks, the load exerted on the load cell 4 peaks at the expected level and then begins to fall off as shown in Figure 7.

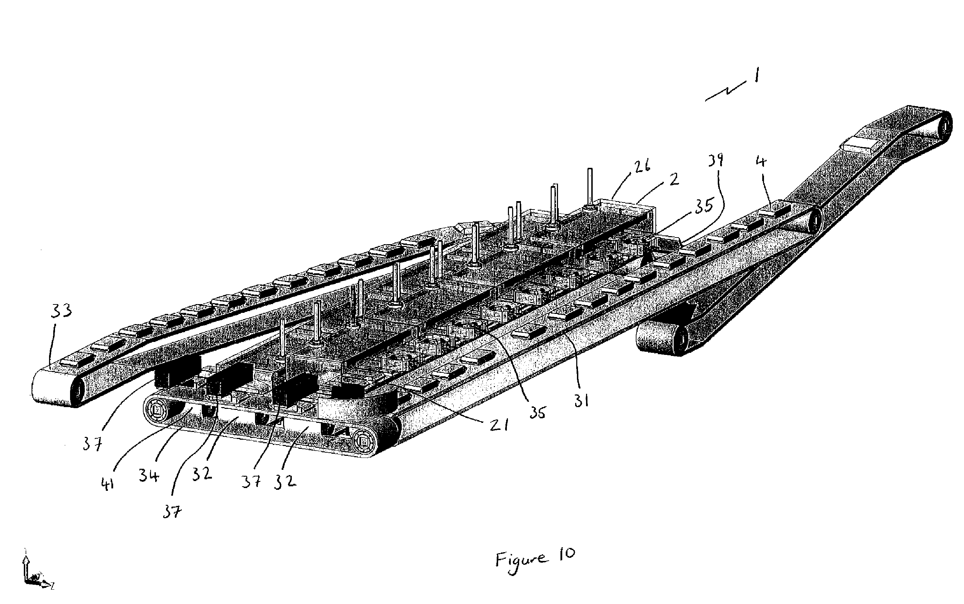

Referring now to Figures 9 and 10, the conveyor belt 19 has flights 21 transverse the direction of travel of the conveyor belt 19. Advantageously, the flights 21 divide the conveyor belt 19 into compartments each of which receives a sealed packaged product 4. An arrangement is provided to cause relative movement between the vacuum chamber 2 and the conveyor belt 19. The arrangement comprises mechanical components coupled to the vacuum chamber 2 for moving the vacuum chamber 2 towards and away from the conveyor belt 19. The mechanical components are powered hydraulically, electrically or pneumatically.

In an alternative embodiment, an arrangement is provided for moving the conveyor belt 19 toward and away from the vacuum chamber 2.

The opening 16 of the vacuum chamber 2 has a sealing member forming an airtight seal between the vacuum chamber 2 and the conveyor belt 19 enclosing the sealed packaged product 4 therein. The vacuum chamber 2 comprises a parallelepiped container 26 having its floor removed creating the opening 16.

Referring especially to Figure 10, the apparatus for detecting a leak 1 also has an inlet conveyor 31, two leak testing conveyors 32 and an outlet conveyor 33. A distribution conveyor 34 creates a pathway between the inlet conveyor 31 and the leak testing conveyors 32. A plurality of fans 35 are provided along the inlet conveyor 31. Advantageously, the sealed packaged products 4 are coming from an area where the packaging has just been heat sealed. The fans 35 cool the molten seals to further reduce the risk of damage to the integrity of the seals prior to leak testing. The distribution conveyor 34 has movable guide members 37 substantially in alignment with the leak testing conveyors 32 and a bypass conveyor 41 for directing packaged products 4 down the predetermined leak testing conveyor 32 and/or the bypass conveyor 41. A collection conveyor 39 is provided along the opposite end of the leak detection conveyors 32 to the distribution conveyor 34. The collection conveyor 39 creates a pathway between the leak detection conveyors 32, the bypass conveyor 41 and the outlet conveyor 33.

The bypass conveyor 41 creates a pathway between the distribution conveyor 34, the collection conveyor 39 and the outlet conveyor 33. Advantageously, if the leak detection apparatus 1 slows down and a build up of packaged products 4 occurs on the inlet conveyor 31, then some of the packaged products 4 can be sent down the bypass conveyor 41. If for example, one of the main leak detection conveyors 32 is damaged, then the leak detection apparatus 1 can continue to run at 50% inspection with the remainder of the packaged products 4 going down the bypass conveyor 41. This ensures that the leak detection apparatus 1 does not interfere with the output of the production line. The collection conveyor 39 has an arrangement for diverting a leaking packaged product 4 to a testing and resealing area.

One or more of the conveyors 31, 32, 33, 34, 39 and 41 are coupled to an electronic control unit 14. The one or more conveyors 31, 32, 33, 34, 39 and 41 are coupled to the same electronic control unit 14 which the transducer 3 is coupled to. Advantageously, if a load cell fails, then the leak detection apparatus 1 is capable of running as normal leaving an empty compartment on the leak detection conveyor 32 under the faulty load cell.

In use, the method of detecting a leak in a sealed packaged product 4 comprises placing the sealed packaged product in the vacuum chamber 2, creating a vacuum in the chamber 2 and allowing the packaging 51 to be in contact with a transducer 3 as the pressure in the vacuum chamber 2 is decreased. The force applied by the packaging 51 to the transducer 3 is measured and analysed to determine if a leak is present. In the event of a leak, the sealed packaged products 4 identified as having a leak are redirected to a testing and resealing area.

Advantageously, the leak testing method is a reliable and quick method capable of carrying out a leak test in approximately 3 to 4 seconds. Allowing time for the vacuum chamber 2 to engage the conveyor belt 19 and pulling a vacuum, there is a cycle time of approximately 6 to 7 seconds. With twenty packaged products 4 per cycle the throughput of the leak detection apparatus 1 is between 170 and 200 packs per minute. This is adequate for current industrial packaging plants.

In use, when the sealed packaged product 4 leaves the sealing area, the inner sealing layer is effectively still molten. Very light forces at this stage can cause the sealing layer to open. Even after the packaged product 4 has moved through a check weighing and labelling equipment the seals can still be quite hot and easily damaged. Directly after the labelling operation the packaged products 4 are manually loaded into the outer cases and this operation can also cause these hot seals to fail.

Using the inlet conveyor 31 with the cooling fans 35 the packaged products' seals are cooled to around 80 degrees Celsius and by the time they reach the outer casing packaging area beyond the leak testing apparatus 1, the temperature of the seals should have diminished to approximately 70 degrees Celsius.

The packaged products 4 are steered down one of the two leak detection conveyors 32 by the guide members 37 also operable by the control unit 14. This allows the leak detection apparatus 1 to test one row of packaged products 4 while simultaneously filling the next batch of packaged products 4 to be tested onto the other leak detection conveyor 32. After the packaged products 4 have been tested for leaks the products 4 identified as leaking can be redirected to a testing and resealing area by activation of a trapdoor on the collection conveyor 39.

The electronic control unit 14 stores information relating to each batch of packaged products 4 tested. During normal run conditions, the leak detection apparatus 1 accumulates information in relation to the frequency of leaks. Any change of the frequency of these leaks can be highlighted to personnel running the packaging line as a warning of a problem with the sealing machine or packaging material. A display screen in the packaging area provides the packaging operators with a live count of failures and flags up any increases of failures. Batch records are also stored electronically for each batch run. At the start of each product run, an operator can input the packaged product size, batch number etc and the electronic control unit 14 stores all information on leaks against this batch number. The leaking packaged products 4 are tested in the testing and resealing area on a bubble emission tester to identify the exact position of the seal which failed to cause the leak.

In a modification, the load cells are each provided with side guards. This is due to the fact that as each pack inflates it acts as bellows creating a large lifting force on the respective load cell. It is necessary in this invention to measure the force due to differential pressure. In order to exclude the force due to the bellows effect the side guards are provided. The guards around the load cell reacts the load away from the load cell allowing it to measure a much smaller force.

Variations and modifications can be made without departing from the scope of the invention outlined above and as claimed hereinafter.

## Claims

1. An apparatus for detecting a leak comprising a vacuum chamber (2), means for generating a vacuum within the vacuum chamber (2) and a transducer (3) disposed within the vacuum chamber (2).

2. An apparatus as claimed in Claim 1, **characterised in that** the transducer is a load cell.

3. An apparatus as claimed in Claim 1 or 2, **characterised in that** the transducer (3) is mounted on the roof (5) of the vacuum chamber (2).

4. An apparatus as claimed in Claim 1, 2 or 3, **characterised in that** the vacuum generating means has a vacuum pump (2) coupled to the vacuum chamber (2) via a vacuum line (9).

5. An apparatus as claimed in Claim 4, **characterised in that** a vacuum valve (11) is mounted on the vacuum line (9).

6. An apparatus as claimed in Claim 5, **characterised in that** the vacuum valve (11) is mounted on the vacuum line (9) intermediate the pump (7) and the vacuum chamber (2).

7. An apparatus as claimed in Claim 4, 5 or 6, **characterised in that** a vacuum regulator (12) is located on the vacuum line (9).

8. An apparatus as claimed in Claim 7, **characterised in that** the vacuum regulator (12) is located on the vacuum line (9) intermediate the vacuum valve (12) and the vacuum chamber (2).

9. An apparatus as claimed in any one of the preceding Claims, **characterised in that** the transducer (3) is coupled to an electronic control unit (14).

10. An apparatus as claimed in Claim 9, **characterised in that** information about leaks and their frequency is documented and used for process control.

11. An apparatus as claimed in Claim 10, **characterised in that** faults or changes in the packaging material seal strength is noticed via comparison with normal values stored electronically in the control unit (14).

12. An apparatus as claimed in Claim 11, **characterised in that** the leak detection apparatus is capable of self diagnosing as it records the information from each load cell.

13. An apparatus as claimed in Claim 12, **characterised in that** the control unit (14) is configured that if the same load cell gives irregular readings, this indicates a faulty load cell.

14. An apparatus as claimed in any of the preceding Claims, **characterised in that** more than one transducer (3) is disposed in the vacuum chamber (2).

15. An apparatus as claimed in Claim 14, **characterised in that** the transducers (3) are spaced along the vacuum chamber (2) which is elongate.

16. An apparatus as claimed in Claim 15, **characterised in that** the transducers (3) are spaced along the roof (5) of the vacuum chamber (2).

17. An apparatus as claimed in any one of the preceding claims **characterised in that** the vacuum chamber (2) has an opening (16).

18. An apparatus as claimed in Claim 17, **characterised in that** the opening (16) of the vacuum chamber (2) is formed for receiving one or more sealed packaged products (4).

19. An apparatus as claimed in any one of the preceding claims **characterised in that** a means for supporting at least one sealed packaged product (4) is also provided.

20. An apparatus as claimed in Claim 19, **characterised in that** the means for supporting the at least one sealed packaged product (4) is a conveyor means.

21. An apparatus as claimed in Claim 20, **characterised in that** the conveyor means has a conveyor belt (19) and drive means.

22. An apparatus as claimed in Claim 21, **characterised in that** the apparatus is incorporated into a production line to allow testing of every packaged product (4) coming from a flow wrap machine.

23. An apparatus as claimed in Claim 21 or 22, **characterised in that** the conveyor belt (19) has flights (21) transverse of the direction of travel of the conveyor belt (19).

24. An apparatus as claimed in Claim 22 or 23, **characterised in that** the flights (21) divide the belt (19) into compartments each of which receives a sealed packaged product (4).

25. An apparatus as claimed in any one of Claim 21 to 24, **characterised in that** means are provided to cause relative movement between the vacuum chamber (2) and the conveyor means.

26. An apparatus as claimed in Claim 25, **characterised in that** the means comprises mechanical components coupled to the vacuum chamber for moving the vacuum chamber towards and away from the conveyor means.

27. An apparatus as claimed in Claim 26, **characterised in that** the mechanical components are powered hydraulically, electrically and/or pneumatically.

28. An apparatus as claimed in any one of Claims 21 to 24, **characterised in that** means are provided for moving the conveyor means toward and away from the vacuum chamber.

29. An apparatus as claimed in any one of Claims 17 to 28, **characterised in that** the opening of the vacuum chamber has sealing means.

30. An apparatus as claimed in Claim 29, **characterised in that** the sealing means forms an airtight seal between the vacuum chamber and the conveyor means enclosing the sealed packaged product therein.

31. An apparatus as claimed in Claim 30, **characterised in that** the sealing means is a rubber seal mounted along the edge of the opening.

32. An apparatus as claimed in any one of Claims 21 to 31, **characterised in that** the vacuum chamber comprises a parallelepiped container having its floor removed creating the opening.

33. An apparatus as claimed in any of the preceding claims **characterised in that** an inlet conveyor, a leak detection conveyor and an outlet conveyor are provided.

34. An apparatus as claimed in Claim 33, **characterised in that** a distribution conveyor creates a pathway between the inlet conveyor and the leak detection conveyor.

35. An apparatus as claimed in Class 33 or 34, **characterised in that** more than one leak detection conveyor is provided.

36. An apparatus as claimed in Claim 33, 34 or 35, **characterised in that** a plurality of fans are provided along the inlet conveyor.

37. An apparatus as claimed in Claim 34, 35 or 36, **characterised in that** the distribution conveyor has movable guide means substantially in alignment with the at least one leak detection conveyor for directing packaged products down the at least one leak detection conveyor.

38. An apparatus as claimed in any one of Claims 34 to 37, **characterised in that** a collection conveyor is provided along the opposite end of the at least one leak detection conveyor to the distribution conveyor.

39. An apparatus as claimed in Claim 38, **characterised in that** the collection conveyor creates a pathway between the leak detection conveyor and the outlet conveyor.

40. An apparatus as claimed in any of the Claim 34 to 39, **characterised in that** a bypass conveyor creates a pathway between the distribution conveyor and the outlet conveyor.

41. An apparatus as claimed in Claim 38, 39 or 40, **characterised in that** the collection conveyor has means for diverting a leaking packaged product to a testing and resealing area.

42. An apparatus as claimed in any one of Claims 33 to 41, **characterised in that** one or more of the conveyors are coupled to an electronic control unit.

43. An apparatus as claimed in Claim 42, **characterised in that** the one or more conveyors are coupled to the same electronic control unit to which the at least one transducer is coupled.

44. An apparatus as claimed in any one of Claims 2 to 43, **characterised in that** leak detection apparatus is capable of running as normal with the electronic control unit operating the conveyors to leave an empty compartment on the leak detection conveyor under the faulty load cell.

45. A method of detecting a leak in a sealed packaged product comprising placing a sealed packaged product (4) in a vacuum chamber (2), creating a vacuum in the chamber (2) and allowing the packaging to be in contact with a transducer (3) as the pressure in the vacuum chamber (2) is decreased.

46. A method as claimed in Claim 45, **characterised in that** the method comprising measuring the force applied by the packaging to the transducer (3).

47. A method as claimed in Claim 46, comprising analysing the force value against force values measured during a test phase use a non leaking packaged product to determine if a leak is present.

48. A method as claimed in claim 47 comprising redirecting sealed packaged products identified as having a leak to a testing and resealing area.
